# EUROPÄISCHE PATENTANMELDUNG

(11) **EP 3 324 206 A1**
(43) Veröffentlichungstag der Anmeldung: **23.05.2018**
(21) Anmeldenummer: 17201789.9
(22) Anmeldetag: 15.11.2017
(51) Int. Cl.: G01S 13/42, G01S 13/93, B60T 8/00

(54) **VERFAHREN ZUM ERMITTELN EINER ANHÄNGERINFORMATION UND KRAFTFAHRZEUG**

(30) Priorität: 16.11.2016 DE 102016222549
(71) Anmelder: AUDI AG, 85045 Ingolstadt (DE)
(72) Erfinder: Khlifi, Rachid, 85748 Garching (DE)

(57) **Zusammenfassung**

Verfahren zum Ermitteln einer einen mit einem Kraftfahrzeug (2) gekuppelten Anhänger (3) betreffenden Anhängerinformation, wobei kraftfahrzeugseitig eine einen oder mehrere Radarsensoren (7) aufweisende Radarsensoreinrichtung (6) verwendet wird, in deren Erfassungsbereich (8) sich der Anhänger (3) zumindest teilweise befindet und welche die Umgebung des Kraftfahrzeug (2) dreidimensional beschreibende Sensordaten bereitstellt, wobei eine Steuereinrichtung (9) des Kraftfahrzeugs (2) aus den Sensordaten die einen Nickwinkel und/oder einen Rollwinkel des Anhängers (3) beschreibende Anhängerinformation ermittelt.

## Beschreibung

Die Erfindung betrifft ein Verfahren zum Ermitteln einer einen mit einem Kraftfahrzeug gekuppelten Anhänger betreffenden Anhängerinformation, wobei kraftfahrzeugseitig eine einen oder mehrere Radarsensoren aufweisende Radarsensoreinrichtung verwendet wird, in deren Erfassungsbereich sich der Anhänger zumindest teilweise befindet und welche die Umgebung des Kraftfahrzeug dreidimensional beschreibende Sensordaten bereitstellt.

Die Verwendung von Radarsensoreinrichtungen zur Umfelderfassung eines Kraftfahrzeugs ist in vielfältiger Art und Weise bekannt. Anwendungsgebiete sind beispielsweise Einparkhilfen, Totwinkelüberwachungen und die Erfassung eines bevorstehenden Crashs. Es wurde ferner bereits vorgeschlagen, einen Fahrer des Kraftfahrzeugs durch ein Fahrerassistenzsystem beim Rangieren bzw. beim Rückwärtsfahren mit einem Anhänger zu unterstützen. Dabei werten heckseitig angeordnete Radarsensoren, die den Anhänger zumindest teilweise erfassen, am Anhänger reflektierte Radarsignale aus und stellen eine Anhängerinformation bereit, die einen horizontalen Knickwinkel, das heißt einen Winkels zwischen der Fahrzeuglängsachse und der Anhängerlängsachse, beschreibt.

DE 10 2004 059 596 A1 offenbart ein Verfahren zum Ermitteln eines Knickwinkels zwischen einer Zugmaschine und mindestens einem Anhänger eines einen Gliederzug bildenden Kraftfahrzeuggespanns, wobei mindestens ein Radar-Sensor der Zugmaschine Positionsdaten von mindestens einem Objekt des Anhängers ermittelt.

DE 10 2008 029 612 A1 offenbart ein Verfahren zum Berechnen des Anhängerkupplungs-Gelenkwinkels in einem Gespann, umfassend ein Motorfahrzeug mit einem Anhänger, der eine Radachse aufweist, die mit diesem drehbar verbunden ist, wobei das Motorfahrzeug wenigstens einen einen Nahbereichsradarwandler umfassenden berührungslosen Sensor enthält. Dabei werden Informationen von Anhängerposition und -bereich von dem Sensor erfasst und zu einem Mikroprozessor übertragen, wonach eine Anhängerdeichsellänge und eine Spurbreite des Anhängers aus den von dem Sensor erfassten Informationen bestimmt werden und der Anhängerkupplungs-Gelenkwinkel basierend auf der Anhängerdeichsellänge und der Spurbreite berechnet wird.

DE 20 2014 007 403 U1 offenbart eine Auflaufbremsanlage für Kraftfahrzeuganhänger mit einer hydraulischen Bremskraftübertragungseinrichtung, einer Steuereinheit, einem in der Bremskraftübertragungseinrichtung angeordneten Umschaltventil, das von der Steuereinheit in Abhängigkeit der Bewegungsrichtung des Kraftfahrzeuganhängers geschaltet ist, und einem Bewegungserkennungssystem zum Erkennen der Stillstands- oder einer Bewegungsrichtung des Kraftfahrzeuganhängers, wobei das Bewegungserkennungssystem eine die Fahrbahnoberfläche abtastende Radareinheit umfasst.

Der Erfindung liegt die Aufgabe zugrunde, die Einsatzmöglichkeiten einer kraftfahrzeugseitigen Radarsensoreinrichtung zur Ermittlung einer Anhängerinformation zu erweitern.

Zur Lösung dieser Aufgabe ist erfindungsgemäß bei einem Verfahren der eingangs genannten Art vorgesehen, dass eine Steuereinrichtung des Kraftfahrzeugs aus den Sensordaten die einen Nickwinkel und/oder einen Rollwinkel des Anhängers beschreibende Anhängerinformation ermittelt.

Die Erfindung beruht auf der Erkenntnis, dass mittels der Radarsensoreinrichtung auch weitere sinnvoll für den Betrieb des Kraftfahrzeugs nutzbare Informationen über die Raumlage oder die kraftfahrzeugbezogene Relativlage des Anhängers ermittelbar sind, die sich insbesondere zur Ermittlung einer fahrdynamisch ungünstigen Massenverteilung des Anhängers eignen. Das dazu ermittelt die Steuereinrichtung erfindungsgemäß den die Neigung des Anhängers um die Anhängerquerachse beschreibenden Nickwinkel und/oder den die Neigung des Anhängers um die Anhängerlängsachse beschreibenden Rollwinkel als Anhängerinformation. Aus dem Nickwinkel kann insbesondere auf die korrekte Einstellung der Stützlast des Anhängers und aus dem Rollwinkel auf eine korrekte Massenverteilung entlang der Anhängerquerachse geschlossen werden. Der Nickwinkel und/oder der Rollwinkel können dabei durch Auswertung der dreidimensionalen Sensordaten ermittelt werden, die aus am Anhänger reflektierten Radarsignalen gewonnen werden und zumindest teilweise eine Tiefen- oder Abstandsinformation umfassen.

Die Erfindung ermöglicht vorteilhafterweise die Ermittlung einer Anhängerinformation, die erweiterte Informationen über die Lage des Anhängers im Kraftfahrzeugkoordinatensystem und/oder im Umfeldkoordinatensystem beschreibt. Aus diesen Daten kann durch weitere Verarbeitungsschritte im Kraftfahrzeug eine ungünstige oder verkehrsregelwidrige Massenverteilung im Anhänger ermittelt werden, was insbesondere eine Verbesserung von Fahrzeugsystemfunktionen oder eine Warnung des Fahrers erlaubt. Insofern kann das erfindungsgemäße Verfahren auch als Verfahren zum Betreiben eines Kraftfahrzeugs aufgefasst oder bezeichnet werden.

Es wird bei dem erfindungsmäßen Verfahren besonders bevorzugt, wenn die Steuereinrichtung zum Ermitteln des Nickwinkels und/oder des Rollwinkels die Ausrichtung einer dem Kraftfahrzeug zugewandten Frontfläche des Anhängers zu dem oder zu zumindest einem Teil der Radarsensoren auswertet. Es wurde erkannt, dass sich sowohl der Nick- als auch der Rollwinkel besonders gut aus Sensordaten ermitteln lässt, die die Frontfläche des Anhängers beschreiben. Die Frontfläche umfasst dabei beispielsweise den Anhängeraufbau, insbesondere umfassend eine formstabile oder aus einer Plane gebildete Außenhaut des Anhängers und/oder eine Bordwand des Anhängers, und/oder Teile einer Anhängerbasis, mit der die Deichsel verbunden ist. Neigt sich oder verkippt der Anhänger um die Anhängerquerachse und/oder um die Anhängerlängsachse verändern sich die an der Frontfläche reflektierten Radarsignale, so dass eine Lageränderung des Anhängers bezüglich des Kraftfahrzeugkoordinatensystem oder des Umfeldkoordinatensystems erfassbar ist. Dies gilt insbesondere bei einer Geradeausfahrt des Gespanns.

Die Steuereinrichtung kann zum Ermitteln des Nickwinkels einen Winkel der Frontfläche bezüglich der Fahrzeughochachse und/oder einer vertikalen Raumachse auswerten. Die Sensordaten der Radarsensoreinrichtung können beispielsweise die räumliche Verteilung von frontflächenseitigen Messpunkten, an denen abgestrahlte Radarsignale reflektiert wurden, beschreiben, so dass eine Vermessung der Lage der Frontfläche des Anhängers bezüglich der Fahrzeughochachse bei Verwendung eines Fahrzeugkoordinatensystems bzw. bezüglich einer vertikalen Raumachse bei Verwendung eines Umfeldkoordinatensystems möglich ist.

Alternativ oder zusätzlich kann die Steuereinrichtung zum Ermitteln des Rollwinkels einen Winkel einer äußeren Kante der Frontfläche bezüglich der Fahrzeugquerachse und/oder der Fahrzeughochachse und/oder einer horizontalen Raumachse und/oder einer vertikalen Raumachse auswerten. Die Kante ist beispielweise eine in Anhängerquerrichtung verlaufende, dem Fahrzeuguntergrund zugewandte Kante der Anhängerbasis oder eine dem Fahrzeuguntergrund abgewandte Kante des Anhängeraufbaus. Ebenso ist eine Berücksichtigung einer im Wesentlichen in Anhängerhochrichtung verlaufenden Seitenkante der Frontfläche möglich. Durch Auswertung des Winkels, den die Kante mit der Fahrzeugquer- und/oder der Fahrzeughochachse bzw. einer horizontalen Raumachse und/oder der vertikalen Raumachse einschließt, kann der Rollwinkel des Anhängers durch die Steuereinrichtung ermittelt werden.

Bei dem erfindungsgemäßen Verfahren wird es ferner bevorzugt, wenn die Steuereinrichtung zum Ermitteln des Nickwinkels und/oder des Rollwinkels die Ausrichtung einer sich entlang der Anhängerlängsachse erstreckenden Seitenfläche des Anhängers zu dem Radarsensor oder zumindest einem Teil der Radarsensoren auswertet. Das heißt, dass die Steuereinrichtung alternativ oder zusätzlich zu der zuvor beschriebenen Berücksichtigung der Frontfläche die Lage einer Seitenfläche des Anhängers auswertet. Bevorzugt geschieht dies bei der Kurvenfahrt des Gespanns, da je nach Größenverhältnis von Kraftfahrzeug und Anhänger und der Anordnung der Radarsensoren die Seitenfläche lediglich bei einer Kurvenfahrt des Kraftfahrzeugs erfassbar ist. Bei einer solchen Kurvenfahrt entsteht ein Knickwinkel zwischen der Fahrzeuglängsachse und der Anhängerlängsachse, so dass aus dem dabei entstehenden Versatz zwischen Kraftfahrzeug und Anhänger eine Erfassung der Seitenfläche möglich wird. Selbstverständlich kann dabei eine fliehkraftbedingte Lageänderung des Anhängers durch die Steuereinrichtung berücksichtigt werden.

Die Steuereinrichtung kann zum Ermitteln des Nickwinkels einen Winkel einer äußeren Kante der Seitenfläche bezüglich der Fahrzeuglängsachse und/oder der Fahrzeughochachse und/oder einer horizontalen Raumachse und/oder einer vertikalen Raumachse auswerten. Mithin kann hier der Nickwinkel durch Auswertung einer dem Fahrzeuguntergrund zugewandten Kante der Anhängerbasis oder der dem Fahrzeuguntergrund abgewandten Kante des Anhängeraufbaus ermittelt werden.

Die Steuereinrichtung kann alternativ oder zusätzlich zum Ermitteln des Rollwinkels einen Winkel der Seitenfläche bezüglich der Fahrzeughochachse und/oder einer horizontalen Raumachse und/oder einer vertikalen Raumachse auswerten. Analog zur zuvor beschriebenen Auswertung der Lage der Frontfläche kann der Winkel anhand von dreidimensional beschriebenen Messpunkten an der Seitenfläche bestimmt werden.

In allen zuvor genannten Fällen umfasst die Auswertung des Winkels anhand einer Fahrzeug- bzw. Raumachse auch eine Auswertung anhand einer durch die Achse aufgespannten Fahrzeug- bzw. Raumebene.

Vorzugsweise wird bei dem erfindungsgemäßen Verfahren in Abhängigkeit der Anhängerinformation ein Warnhinweis ausgegeben und/oder die Funktion wenigstens eines Fahrzeugsystems des Kraftfahrzeugs modifiziert. Die Anhängerinformation kann also wie bereits eingangs erwähnt im Rahmen des Betriebs des Kraftfahrzeugs bzw. des Gespanns verwendet werden.

Insbesondere wird in Abhängigkeit des Nickwinkels ein eine zu geringe oder zu hohe Stützlast des Anhängers auf eine Anhängerkupplung des Kraftfahrzeugs anzeigender Warnhinweis ausgegeben. Die korrekte Einstellung der Stützlast des Anhängers auf die Anhängerkupplung des Kraftfahrzeugs hat einerseits einen wichtigen Einfluss auf die Fahrdynamik des Kraftfahrzeugs und kann andererseits auch durch Verkehrsvorschriften vorgegeben sein. So sieht deutsches Recht eine vorgeschriebene Stützlast von mindestens 4 % des Anhängergewichts und höchstens 25 kg vor. Eine fehlerhafte bzw. unzulässige Stützlast macht sich im Fall einer zu hohen Stützlast durch eine Neigung des Anhänger hin zum Fahrzeug und im Fall einer zu geringen Stützlast durch eine Neigung des Anhängers vom Fahrzeug weg bemerkbar. Eine optimale Stützlast kann mithin erkannt werden, wenn die Deichsel des Anhängers im Wesentlichen horizontal verläuft. Anhand des Nickwinkels kann dem Fahrer somit ein Warnhinweis ausgegeben werden, der ihn zur Überprüfung der Stützlast veranlasst, um die negativen Auswirkungen einer fehlerhaften Stützlast auf die Fahrdynamik zu vermeiden.

Alternativ oder zusätzlich kann in Abhängigkeit des Rollwinkels ein eine ungünstige Masseverteilung in Anhängerquerrichtung anzeigender Warnhinweis ausgegeben werden. Auch eine solche ungünstige Masseverteilung kann einen negativen Einfluss auf die Fahrdynamik des Gespanns haben, beispielsweise wenn zu transportierenden Lasten bezüglich der Fahrtrichtung des Gespanns zu weit links oder zu weit rechts im Anhänger angeordnet sind oder sich dorthin bewegen. Dies macht sich durch Verkippen des Anhängers um die Anhängerlängsachse bemerkbar, so dass ebenfalls in Abhängigkeit des Rollwinkels eine Warnung des Fahrers erfolgen kann.

Besonders bevorzugt wird eine den Bremsweg des Kraftfahrzeugs berücksichtigende Funktion derart modifiziert, dass ein längerer Bremsweg des Kraftfahrzeugs zugrunde gelegt wird. Es wurde erkannt, dass insbesondere eine fehlerhaft eingestellte Stützlast des Anhängers zu einer Verlängerung des Bremswegs des Gespanns führt. Ein Fahrzeugsystem, welches den Bremsweg des Kraftfahrzeugs bzw. des Gespanns im Rahmen seiner Funktionalität berücksichtigt, kann so durch die Steuereinrichtung dahingehend angesteuert werden, dass ein längerer Bremsweg beim Durchführen der Funktion berücksichtigt wird.

Als Fahrzeugsystem kann ein Abstandsregeltempomat und/oder Überholassistent verwendet werden.

Besonders zweckmäßig ist es, wenn die Funktion des Fahrzeugsystems erst nach Ablauf einer vorgegebenen Zeitspanne, während welcher keine Reaktion des Fahrers des Kraftfahrzeugs auf den ausgegebenen Warnhinweis erfasst wurde, modifiziert wird. Der Fahrer kann mithin zunächst die Gelegenheit erhalten, durch Veränderung der Beladung des Anhängers eine verbesserte Massenverteilung vorzunehmen. Erfasst die Steuereinrichtung jedoch keine Reaktion des Fahrers, beispielsweise weil über die gesamte Zeitspanne keine Verbesserung des Nickwinkels und/oder des Rollwinkels erfasst wird, erfolgt die Modifikation der Funktion des Fahrzeugsystems.

Besonders bevorzugt wird bei dem erfindungsgemäßen Verfahren wenigstens ein Radarsensor mit einer variablen Frequenzbandbreite verwendet, wobei beim Betrieb des Kraftfahrzeugs mit dem gekuppelten Anhänger eine höhere Frequenzbandbreite verwendet wird als bei einem anhängerlosen Betrieb des Kraftfahrzeugs. Die Radarsensoreinrichtung kann dadurch sowohl für die Umfelderfassung auf weite Distanz, wenn kein gekuppelter Anhänger eine solche Erfassung behindert, als auch zur Erfassung des Anhängers in seinem gekuppelten Zustand verwendet werden. Der Problematik, dass im anhängerlosen Betrieb eine Erfassungsreichweite von mehreren zehn oder einigen hundert Metern angestrebt wird, wohingegen Reichweiten von wenigen zehn Zentimetern bis wenigen Metern im Nahbereich zur Erfassung des Anhängers erforderlich sind, wird dadurch begegnet, dass der oder ein jeweiliger Radarsensor zum Betrieb mit unterschiedlichen Frequenzbandbreiten angesteuert wird. Beispielsweise kann der oder ein jeweiliger als FMCW-Radar ausgebildeter Radarsensor mit unterschiedlichen rampenartigen Frequenzverläufen betrieben werden.

Schließlich ist es bei dem erfindungsgemäßen Verfahren von Vorteil, wenn eine Radarsensoreinrichtung mit mehreren zumindest teilweise überlappende Einzelerfassungsbereichen aufweisenden Radarsensoren verwendet wird. Die Radarsensoren der Radarsensoreinrichtung können eine redundante Abdeckung des Erfassungsbereichs realisieren, was eine hochpräzise Ermittlung der Lage des Anhängers ermöglicht.

Daneben wird die der Erfindung zu Grunde liegende Aufgabe erfindungsgemäß durch ein Kraftfahrzeug gelöst, umfassend eine Anhängerkupplung zum Kuppeln eines Anhängers, eine einen oder mehrere Radarsensoren aufweisende Radarsensoreinrichtung, deren Erfassungsbereich den Anhänger in seinem gekuppelten Zustand zumindest teilweise umfasst und mittels welcher die Umgebung des Kraftfahrzeug dreimensional beschreibende Sensordaten bereitstellbar sind. Das erfindungsgemäße Kraftfahrzeug zeichnet sich dadurch aus, dass das Kraftfahrzeug zum Durchführen des erfindungsgemäßen Verfahrens eingerichtet ist.

Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus dem im Folgenden beschriebenen Ausführungsbeispiel sowie anhand der Zeichnungen. Diese sind schematische Darstellung und zeigen:
- Fig. 1: eine Prinzipskizze eines Gespanns aus einem erfindungsgemäßen Kraftfahrzeug und einem Anhänger;
- Fig. 2: eine Prinzipskizze des Gespanns mit einer zu hohen Stützlast; und
- Fig. 3: eine Prinzipskizze des Gespanns mit einer zu geringen Stützlast.

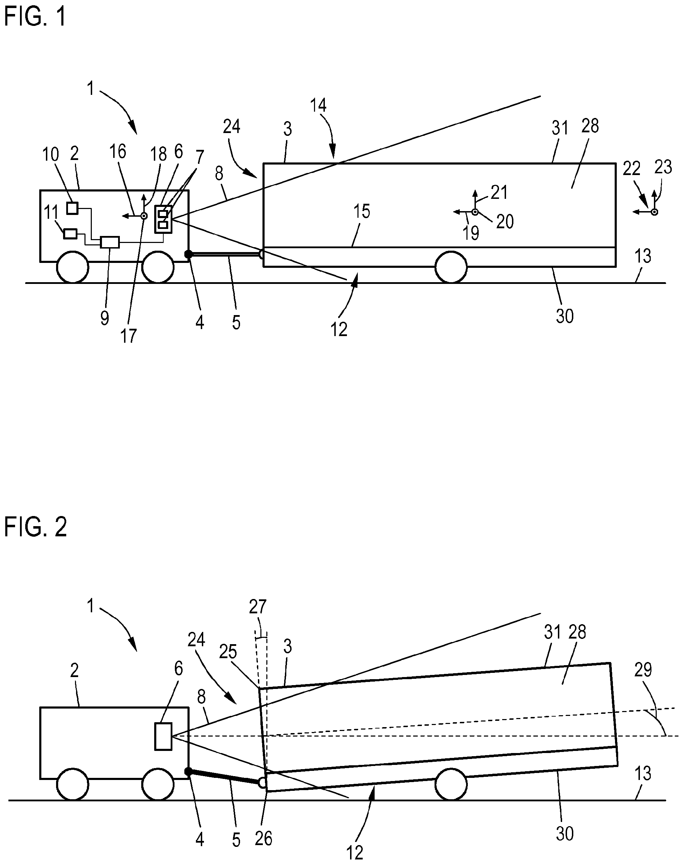

Fig. 1 zeigt eine Prinzipskizze eines Gespanns 1, umfassend ein Kraftfahrzeug 2 und einen damit gekuppelten Anhänger 3.

Das Kraftfahrzeug 2 weist eine Anhängerkupplung 4, an welcher eine Deichsel 5 des Anhängers 3 lösbar angeordnet ist, und eine Radarsensoreinrichtung 6 auf, welche den rückwärtige Bereich des Kraftfahrzeugs 2 erfasst und mehrere heckseitig angeordnete Radarsensoren 7 aufweist. Ein Erfassungsbereich 8 der Radarsensoreinrichtung 6 erfasst zumindest teilweise den Anhänger 3, wenn dieser mit dem Kraftfahrzeug 2 gekuppelt ist, wobei sich jeweilige Einzelerfassungsbereiche der Radarsensoren 7 teilweise überlappen und so eine redundante, hochpräzise Erfassung des rückwärtigen Bereichs erlauben. Die Radarsensoreinrichtung 6 wird dabei auch zur Erfassung des rückwärtigen Bereichs des Kraftfahrzeugs 2 verwendet, wenn kein Anhänger 3 mit diesem gekuppelt ist. Da in diesem Fall eine Sensorreichweite von mehreren zehn oder einigen hundert Metern gewünscht ist, wird bei einem anhängerlosen Betrieb des Kraftfahrzeugs 2 eine geringere Frequenzbandbreite verwendet als bei einer Vermessung des Ultranahbereichs oder des Nahbereichs bei einem Betrieb mit dem Anhänger 3.

Kraftfahrzeugseitig ist ferner eine Steuereinrichtung 9 vorgesehen, welche aus Sensordaten der Radarsensoreinrichtung eine einen Nick- und einen Rollwinkel des Anhängers 3 beschreibende Anhängerinformation ermittelt. In Abhängigkeit dieser Anhängerinformation steuert die Steuereinrichtung 9 eine akustische und/oder visuelle und/oder haptische Ausgabeeinrichtung 10 sowie ein oder mehrere Fahrzeugsysteme 11, beispielsweise einen Abstandsregelungstempomaten und/oder einen Überholassistenten, an.

Der Anhänger 3 weist eine Anhängerbasis 12, welche dem Fahrzeuguntergrund 13 zugewandt ist, und einen Anhängeraufbau 14 auf. Dieser umfasst beispielsweise eine Bordwand 15, eine Plane oder einen festen, kastenartigen Aufbau. Der Anhänger 3 kann, wie in Fig. 1 gezeigt, einachsig oder alternativ mehrachsig ausgebildet sein. Der Anhänger 3 kann ferner im Wesentlichen zum Gütertransport vorgesehen sein und dazu eine Ladefläche oder einen Tank aufweisen oder ein Wohnanhänger sein.

Fig. 1 zeigt ferner Koordinatenkreuze, die eine Fahrzeuglängsachse 16, eine Fahrzeugquerachse 17, eine Fahrzeughochachse 18, eine Anhängerlängsachse 19, eine Anhängerquerachse 20 und eine Anhängerhochachse 21 sowie horizontale Raumachsen 22 und eine vertikaler Raumachse 23 zeigen.

Im in Fig. 1 gezeigten Betriebszustand des Gespanns 1 ist der Anhänger 3 mit einer korrekten Stützlast an das Kraftfahrzeug 2 gekoppelt, was sich in der Praxis an einen im Wesentlichen horizontalen Verlauf der Deichsel 5 erkennen lässt. Mit anderen Worten verläuft die Deichsel 5 in diesem Zustand sowohl entlang der Fahrzeuglängsachse 16 als auch entlang der Anhängerlängsachse 19. Erfasst die Radarsensoreinrichtung 6 in diesem Betriebszustand eine Frontfläche 24 des Anhängers 3, beschreiben die dreidimensionalen Sensordaten im Wesentlichen einen vertikalen Verlauf dieser Frontfläche 24.

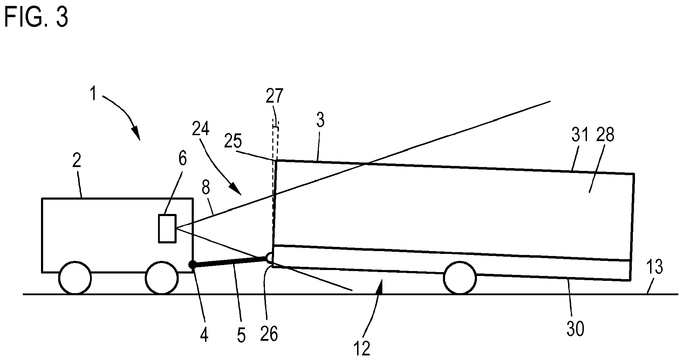

Die Figuren 2 und 3 zeigen jeweils eine Prinzipskizze des Gespanns 1 in einem Betriebszustand mit falscher Stützlast, wobei Fig. 2 einen Betriebszustand des Gespanns 1 mit zu einer zu hohen und Fig. 3 einen Betriebszustand mit einer zu geringen Stützlast zeigt. Eine zu hohe Stützlast resultiert typischerweise daraus, dass eine Beladung des Anhängers 3 nicht auf der oder den Achsen des Anhängers 3 angeordnet bzw. gleichmäßig verteilt ist, sondern sich im Fall einer zu hohen Stützlast zu nah am Kraftfahrzeug 2 bzw. im Fall einer zu geringen Stützlast zu weit entfernt vom Kraftfahrzeug 2 befindet. Eine fehlerhafte Stützlast hat negative Einflüsse auf die Fahrdynamik des Gespanns 1 und kann zudem durch Verkehrsvorschriften unzulässig sein.

In Fig. 2 weist der Anhänger 3 einen positiven Nickwinkel auf. Das heißt eine äußere Kante 25 der Frontfläche 24 befindet sich näher am Kraftfahrzeug 2 als eine durch die Anhängerbasis gebildete äußere Kante 26 der Frontfläche 24. Zur Ermittlung des Nickwinkels wertet die Steuereinrichtung 9 einen Winkel 27 der Frontfläche 24 bezüglich der Fahrzeughochachse 18 oder der vertikalen Raumachse 23 aus. Analog dazu kann der negative Nickwinkel, der in Fig. 3 gezeigt ist, ermittelt werden.

Eine weitere Möglichkeit zur Ermittlung des Nickwinkels ergibt sich aus der Betrachtung von Sensordaten, welche die Lage bzw. die Ausrichtung einer Seitenfläche 28 des Anhängers 3 beschreiben. Die Seitenfläche 28 kann insbesondere bei einer Kurvenfahrt des Gespanns in den Erfassungsbereich 8 der Radarsensoreinrichtung 6 gelangen. In diesem Fall kann die Steuereinrichtung 9 einen Winkel 29 einer äußeren Kante 30, 31 der Seitenfläche 28, beispielsweise die untere Kante 30 der Anhängerbasis 12 oder die obere Kante 31 des Anhängeraufbaus 14, bezüglich der Fahrzeuglängsachse 16 und/oder der Fahrzeughochachse 18 und/oder einer horizontalen Raumachse 22 und/oder einer vertikalen Raumachse 23 auswerten. Welche der äußeren Kanten 30, 31 bei der Ermittlung des Winkels 29 berücksichtigt wird, hängt insbesondere davon ab, welche von ihnen sich im Erfassungsbereich 8 der Radarsensoreinrichtung 9 befindet, was wiederum von den Abmessungen des Anhängers und der Anordnung der Radarsensoren 7 am Kraftfahrzeug 2 abhängig ist.

Zusätzlich zur Ermittlung des Nickwinkels ermittelt die Steuereinrichtung 9 einen Rollwinkel des Anhängers 3, also eine Verkippung um die Anhängerlängsachse 19. Ein positiver oder negativer Rollwinkel resultiert typischerweise aus einer ungleichmäßigen Beladung des Anhängers 3 in Anhängerquerrichtung 20. Zur Ermittlung des Rollwinkels wertet die Steuereinrichtung analog zur zuvor beschriebenen Ermittlung des Nickwinkels einen Winkel einer äußeren Kante, beispielsweise der Kanten 25, 26 oder einer seitlichen Kante, der Frontfläche 24 bezüglich der Fahrzeughochachse 18 und/oder der Fahrzeugquerachse 17 und/oder einer horizontalen Raumachse 22 und/oder der vertikalen Raumachse 23 aus. Bei einer Kurvenfahrt des Gespanns 1 wird zu Ermitteln des Rollwinkels alternativ oder zusätzlich ein Winkel der Seitenfläche 28 bezüglich der Fahrzeughochachse 18 und/oder einer horizontalen Raumachse 22 und/oder der vertikalen Raumachse 23 ausgewertet.

Ermittelt die Steuereinrichtung 9, dass der Roll- und/oder der Nickwinkel einen vorgegebenen Schwellwert überschreitet, wird die Ausgabeeinrichtung 10 zur Ausgabe eines Warnhinweises an den Fahrer des Kraftfahrzeugs 2 angesteuert. Reagiert dieser innerhalb einer vorgegebenen Zeitspanne von beispielsweise einer Minute nicht auf den Warnhinweis, so steuert die Steuereinrichtung 9 die Fahrzeugsysteme 11 dahingehend an, dass für eine den Bremsweg des Kraftfahrzeugs 2 berücksichtigende Funktion ein längerer Bremsweg zugrunde gelegt wird.

## Patentansprüche

1. Verfahren zum Ermitteln einer einen mit einem Kraftfahrzeug (2) gekuppelten Anhänger (3) betreffenden Anhängerinformation, wobei kraftfahrzeugseitig eine einen oder mehrere Radarsensoren (7) aufweisende Radarsensoreinrichtung (6) verwendet wird, in deren Erfassungsbereich (8) sich der Anhänger (3) zumindest teilweise befindet und welche die Umgebung des Kraftfahrzeug (2) dreidimensional beschreibende Sensordaten bereitstellt,
**dadurch gekennzeichnet,**
**dass** eine Steuereinrichtung (9) des Kraftfahrzeugs (2) aus den Sensordaten die einen Nickwinkel und/oder einen Rollwinkel des Anhängers (3) beschreibende Anhängerinformation ermittelt.

2. Verfahren nach Anspruch 1,
**dadurch gekennzeichnet,**
**dass** die Steuereinrichtung (9) zum Ermitteln des Nickwinkels und/oder des Rollwinkels die Ausrichtung einer dem Kraftfahrzeug (2) zugewandten Frontfläche (24) des Anhängers (3) zu dem oder zu zumindest einem Teil der Radarsensoren (7) auswertet.

3. Verfahren nach Anspruch 2,
**dadurch gekennzeichnet,**
**dass** die Steuereinrichtung (9) zum Ermitteln des Nickwinkels einen Winkel (27) der Frontfläche (24) bezüglich der Fahrzeughochachse (18) und/oder einer vertikalen Raumachse (23) und/oder zum Ermitteln des Rollwinkels einen Winkel einer äußeren Kante (25, 26) der Frontfläche bezüglich der Fahrzeugquerachse (17) und/oder Fahrzeughochachse (18) und/oder einer horizontalen Raumachse (22) und/oder einer vertikalen Raumachse (23) auswertet.

4. Verfahren nach einem der vorhergehenden Ansprüche,
**dadurch gekennzeichnet,**
**dass** die Steuereinrichtung (9), insbesondere bei einer Kurvenfahrt des aus dem Kraftfahrzeug (2) und dem Anhänger (3) gebildeten Gespanns (1), zum Ermitteln des Nickwinkels und/oder des Rollwinkels die Ausrichtung einer sich entlang der Anhängerlängsachse (19) erstreckenden Seitenfläche (28) des Anhängers (3) zu dem Radarsensor (7) oder zu zumindest einem Teil der Radarsensoren (7) auswertet.

5. Verfahren nach Anspruch 4,
**dadurch gekennzeichnet,**
**dass** die Steuereinrichtung (9) zum Ermitteln des Nickwinkels einen Winkel (29) einer äußeren Kante der Seitenfläche (28) bezüglich der Fahrzeuglängsachse (16) und/oder Fahrzeughochachse (18) und/oder einer horizontalen Raumachse (22) und/oder einer vertikalen Raumachse (23) und/oder zum Ermitteln des Rollwinkels einen Winkel der Seitenfläche (28) bezüglich der Fahrzeughochachse (18) und/oder einer horizontalen Raumachse (22) und/oder einer vertikalen Raumachse (23) auswertet.

6. Verfahren nach einem der vorhergehenden Ansprüche,
**dadurch gekennzeichnet,**
**dass** in Abhängigkeit der Anhängerinformation ein Warnhinweis ausgegeben und/oder die Funktion wenigstens eines Fahrzeugsystems (11) des Kraftfahrzeugs (2) modifiziert wird.

7. Verfahren nach Anspruch 6,
**dadurch gekennzeichnet,**
**dass** in Abhängigkeit des Nickwinkels ein eine zu geringe oder zu hohe Stützlast des Anhängers (3) auf eine Anhängerkupplung (4) des Kraftfahrzeugs (2) anzeigender Warnhinweis und/oder in Abhängigkeit des Rollwinkels ein eine ungünstige Masseverteilung in Anhängerquerrichtung (20) anzeigender Warnhinweis ausgegeben wird.

8. Verfahren nach Anspruch 6 oder 7,
**dadurch gekennzeichnet,**
**dass** eine den Bremsweg des Kraftfahrzeugs (2) berücksichtigende Funktion derart modifiziert wird, dass ein längerer Bremsweg des Kraftfahrzeugs (2) zugrunde gelegt wird.

9. Verfahren nach einem der Ansprüche 6 bis 8,
**dadurch gekennzeichnet,**
**dass** als Fahrzeugsystem (11) ein Abstandsregeltempomat und/oder ein Überholassistent verwendet wird.

10. Verfahren nach einem der Ansprüche 6 bis 9,
**dadurch gekennzeichnet,**
**dass** die Funktion des Fahrzeugsystems (11) erst nach Ablauf einer vorgegebenen Zeitspanne, während welcher keine Reaktion des Fahrers des Kraftfahrzeugs (2) auf den ausgegebenen Warnhinweis erfasst wurde, modifiziert wird.

11. Verfahren nach einem der vorhergehenden Ansprüche,
**dadurch gekennzeichnet,**
**dass** wenigstens ein Radarsensor (7) mit einer variablen Frequenzbandbreite verwendet wird, wobei beim Betrieb des Kraftfahrzeugs (2) mit dem gekuppelten Anhänger (3) eine höhere Frequenzbandbreite verwendet wird als bei einem anhängerlosen Betrieb des Kraftfahrzeugs (2).

12. Verfahren nach einem der vorhergehenden Ansprüche,
**dadurch gekennzeichnet,**
**dass** eine Radarsensoreinrichtung (6) mit mehreren zumindest teilweise überlappende Einzelerfassungsbereichen aufweisenden Radarsensoren (7) verwendet wird.

13. Kraftfahrzeug, umfassend eine Anhängerkupplung (4) zum Kuppeln eines Anhängers (3), eine einen oder mehrere Radarsensoren (7) aufweisende Radarsensoreinrichtung (6), deren Erfassungsbereich (8) den Anhänger (3) in seinem gekuppelten Zustand zumindest teilweise umfasst und mittels welcher die Umgebung des Kraftfahrzeug (2) dreidimensional beschreibende Sensordaten bereitstellbar sind,
**dadurch gekennzeichnet,**
**dass** das Kraftfahrzeug (2) zum Durchführen eines Verfahrens nach einem der vorhergehenden Ansprüche eingerichtet ist.
